# EUROPEAN PATENT APPLICATION

(11) **EP 4 445 807 A1**
(43) Date of publication of application: **16.10.2024**
(21) Application number: 21967333.2
(22) Date of filing: 09.12.2021
(51) Int. Cl.: A47J 31/06, A47J 31/46, A47J 31/44

(54) **COFFEE MAKER THAT VARIABLY SUPPORTS WATER SUPPLY TUBE**

(30) Priority: 07.12.2021 KR 20210173350
(71) Applicant: LG Electronics Inc., Yeongdeungpo-gu Seoul 07336 (KR)
(72) Inventor: YANG, Jungkeun, Seoul 08592 (KR); NAM, Hyeunsik, Seoul 08592 (KR); CHOI, Seung-Yeon, Seoul 08592 (KR)
(74) Representative: Vossius & Partner Patentanwälte Rechtsanwälte mbB
(86) International application number: PCT/KR2021/018667
(87) International publication number: WO 2023/106460

(57) **Abstract**

Disclosed is an invention relating to a coffee maker that variably supports a water supply tube. A coffee maker that variably supports a water supply tube, according to the present invention comprises: a dripper, which receives water and ground coffee via the open upper side thereof, and extracts liquid coffee from the ground coffee and discharges same downward; and a water outlet module which is located above the dripper and supplies water to the inside of the dripper, wherein the water outlet module comprises a water supply tube which supplies water to the mouth of the dripper, a pipeline support part which is installed in a shape so as to surround the outer-side of the water supply tube, a connection frame which extends from the pipeline support part, and a rotational support shaft which rotatably connects the connection frame to a moving housing part of the water outlet module.

## Description

### [Technical Field]

The present invention relates to a coffee maker that variably supports a water supply tube, and more specifically, to a coffee maker that variably supports a water supply tube capable of stably supporting a moving water supply tube.

### [Background Art]

A coffee maker is an apparatus that brews coffee, and an apparatus that automatically brews coffee beans when coffee and water are supplied.

Generally, a coffee maker includes a container that receives ground coffee and a dispenser that supplies water to the inside of the container. Conventional dispensers supply water only to a portion of the coffee received inside the container. Thus, because the contact area between ground coffee and water is small, high-quality coffee cannot be produced.

A coffee maker includes a boiler module that stores water and heats the water to a set temperature, a nozzle that receives hot water from the boiler module and discharges the hot water, an electric device that rotates the nozzle and implements a drip pattern, a dripper that fills a filter with ground coffee and pours the hot water to extract coffee, and a server that receives the filtered coffee from the dripper.

The nozzle in the coffee maker is fixed to the main frame located on the upper side of the dripper, and the main frame moves in a linear direction by the operation of a second motor. In addition, the nozzle is coupled to a hot water supply tube.

The hot water supply tube is a soft tube, and the main frame connected to the nozzle functions as a tube to supply water. However, since it is made of a single tube structure, the nozzle moves only in a linear direction.

In addition, if the hot water supply tube is moved along with the nozzle while the nozzle is connected only to the hot water supply tube, the load of the hot water supply tube is transferred to the nozzle, causing a problem in that the fatigue load of the nozzle increases.

The background technology of the present invention is disclosed in Republic of Korea Patent Registered Publication No. 10-1913340 (registered on October 24, 2018, title with an apparatus for manufacturing drip coffee).

### [Disclosure]

### [Technical Problem]

An object of the present invention is to provide a coffee maker that variably supports a water supply tube that can stably support a moving water supply tube of a soft material.

In addition, an object of the present invention is to provide a coffee maker that variably supports a water supply tube that can alleviate the phenomenon of load being concentrated on the area connected to the water supply tube.

The objects of the present invention are not limited to the objects mentioned above, and other objects and advantages of the present invention that are not mentioned can be understood by the following description and will be more clearly understood by the embodiments of the present invention. In addition, it will be readily apparent that the objects and advantages of the present invention can be realized by the means and combinations thereof indicated in the claims.

### [Technical Solution]

In order to achieve the above described objects, a coffee maker that variably supports a water supply tube according to the present invention has a technical feature in that a variable support part rotatably installed on the side of a movable housing part supports a soft water supply tube.

Specifically, a variable support part including a pipeline support part, a connection frame, and a rotational support shaft is rotatably installed on the side of the movable housing part, and a water supply tube is installed in a shape that penetrates the pipeline support part. Therefore, the pipeline support part moves according to the movement of the water supply tube, so the water supply tube can be supported stably.

In addition, a coffee maker that variably supports a water supply tube according to the present invention has a technical feature in that the soft water supply tube is supported by the pipeline support part, so the phenomenon of load being concentrated on the area connected to the water supply tube is alleviated.

Specifically, when the soft water supply tube moves, the pipeline support part that supports the water supply tube rotates around the rotational support shaft to support the water supply tube, thereby alleviating the phenomenon where the load of the water supply tube is concentrated on parts connected to the water supply tube.

A coffee maker that variably supports a water supply tube according to the present inventio comprises a dripper, which receives water and ground coffee via an open upper side thereof, and extracts liquid coffee from the ground coffee and discharges the liquid coffee downward, and a water outlet module which is located above the dripper and supplies the water to an inside of the dripper.

In addition, the water outlet module comprises a water supply tube which supplies the water to an inlet of the dripper, a pipeline support part which is installed in a shape so as to surround an outside of the water supply tube, a connection frame which extends from the pipeline support part, and a rotational support shaft which rotatably connects the connection frame to a moving housing part of the water outlet module.

In addition, the water supply tube may be made of a soft tube.

In addition, the pipeline support part may be formed in a ring shape and has an inner diameter larger than an outer diameter of the water supply tube.

In addition, the connection frame extends to a lower side of the pipeline support part, and includes an upper side connected to the pipeline support part and a lower side rotatably connected to the rotational support shaft.

In addition, the water supply tube is rotatably connected to the water outlet arm. The water outlet arm includes a mounting body, a first arm, and a second arm.

The mounting body is rotatably coupled to the first moving part. The first arm extends from the mounting body and is connected to the water supply tube. The second arm extends from the mounting body and is engaged by the gear provided in the second moving part.

In addition, the first moving part rotatably supports the water outlet arm and moves the water outlet arm in a circumferential direction.

In addition, a second moving part is successively installed on the first moving part, includes a gear engaged with the water outlet arm, rotates in the same direction as the first moving part, and rotates the water outlet arm by a speed difference from the first moving part.

In addition, the first moving part comprises a first ring gear that extends in a ring shape and includes a first external gear along an outer circumference, a rotational support protrusion that protrudes from the first ring gear and rotatably supports the water outlet arm, a first drive motor that supplies power to rotate the first ring gear, and a first connection gear that transmits the power of the first drive motor to the first ring gear.

In addition, the second moving part comprises a second ring gear that extends in a ring shape above the first ring gear, and includes a second external gear along an outer circumference, and an inner gear engaging the water outlet arm on an inside thereof, a second drive motor that supplies the power to rotate the second ring gear, and a second connection gear that transmits the power of the second drive motor to the second ring gear.

In addition, the movable housing part supports the first moving part and second moving part and is fixed to the case part. The connection frame is rotatably installed on a side of the movable housing part.

In addition, the water supply tube moves together with the water outlet arm, and as the water supply tube moves, the pipeline support part and connection frame rotate around the rotational support shaft.

In addition, the connection frame comprises a main frame that extends downward from the pipeline support part, and a subframe that is connected to a lower portion of the main frame and is connected to the rotational support shaft.

In addition, the present invention further comprises a pipeline mounting part that is connected to the subframe and includes a groove for inserting the water supply tube.

The pipeline mounting part comprises a mounting block that forms a groove into which the water supply tube is inserted, and a mounting frame that connects the mounting block and subframe.

In addition, the present invention further comprises a case part that forms an exterior of a product, and a grinder that is installed in the case part, grinds coffee bean to discharge the ground coffee to the dripper located on a lower side thereof.

In addition, the present invention further comprises a server located below the dripper and including the coffee extracted from the dripper.

### [Advantageous Effects]

In a coffee maker that variably supports a water supply tube according to the present invention, the soft water supply tube moving along the water outlet arm is supported by the variable support part, thereby preventing damage to the water supply tube and reducing maintenance costs.

In addition, according to the present invention, the soft water supply tube is supported by a variable support part to prevent stress from being concentrated on the water outlet arm connected to the water supply tube, thereby increasing the durability of the water outlet arm and improving the operation reliability of the water outlet arm.

In addition to the above-described effects, specific effects of the present invention are described below while explaining specific details for carrying out the invention.

### [Description of Drawings]

FIG. 1 is a perspective view of a coffee maker that variably supports a water supply tube according to an embodiment of the present invention.
FIG. 2 is a front view of a coffee maker that variably supports a water supply tube according to an embodiment of the present invention.
FIG. 3 is a cross-sectional view of a coffee maker that variably supports a water supply tube according to an embodiment of the present invention.
FIG. 4 is a perspective view illustrating a main configuration of a coffee maker that variably supports a water supply tube according to an embodiment of the present invention.
FIG. 5 is an exploded perspective view illustrating a main components of a coffee maker that variably supports a water supply tube according to an embodiment of the present invention.
FIG. 6 is a perspective view illustrating a state in which a variable support part supports a water supply tube, according to an embodiment of the present invention.
FIG. 7 is a perspective view illustrating a state in which a connection frame is rotated around a rotational support shaft, according to an embodiment of the present invention.
FIG. 8 is an exploded perspective view of a water outlet module according to an embodiment of the present invention.
FIG. 9 is a front view illustrating a state in which a variable support part supports a water supply tube, according to an embodiment of the present invention.
FIG. 10 is a front view illustrating a state in which a variable support part rotates in a first direction, according to an embodiment of the present invention.
FIG. 11 is a front view illustrating a state in which a variable support part rotates in a second direction, according to an embodiment of the present invention.

### [Mode for Invention]

The above-described objectives, features and advantages are specifically described with reference to the attached drawings hereunder such that one having ordinary skill in the art to which the present invention pertains may easily implement the technical spirit of the present invention. In describing the present invention, detailed description of known technologies in relation to the present invention is omitted if it is deemed to make the gist of the present invention unnecessarily vague. Below, preferred embodiments of the present invention are specifically described with reference to the attached drawings. Throughout the drawings, identical reference numerals denote identical or similar components.

It will be understood that, although the terms first, second, and other terms may be used herein to describe various components, these components should not be limited by these terms. These terms are only used to distinguish one component from another, and. a first component may be a second component unless stated to the contrary.

Hereinafter, when any component is arranged at "an upper portion (or a lower portion)" of the component or "on (or under") of the component, any component can be arranged in contact with an upper surface (or a lower surface) of the component, and another component can be interposed between the component and any component arranged on (or under) the component.

Further, when one component is described as being "connected", "coupled", or "connected" to another component, the components can be directly connected or able to be connected to the other component; however, it is also to be understood that an additional component can be "interposed" between the two components, or the two components can be "connected", "coupled" or "connected" through an additional component.

Throughout the specification, each component may be provided as a single one or a plurality of ones, unless explicitly stated to the contrary.

As used herein, singular expressions include plural expressions, unless the context clearly indicates otherwise. It should be further understood that the terms "comprise" or "have" and the like, set forth herein, are not interpreted as necessarily including all the stated components or steps but may be interpreted as excluding some of the stated components or steps or may be interpreted as including additional components or steps.

Throughout the specification, unless otherwise stated, "A and/or B" means A, B or A and B. Unless otherwise stated, "C to D" means "C or more and D or less".

Hereinafter, a coffee maker 1 that variably supports a water supply tube according to an embodiment of the present invention will be described.

In the present invention, the term "whole beans" refers to roasted coffee beans, not raw coffee beans harvested from coffee trees. The roasted coffee beans can be classified according to a roasted degree. For example, dark roasted coffee that is roasted for a long time can dissolve coffee ingredients in water more easily than light roasted coffee.

In addition, in the present invention, the size of coffee powder, which is ground coffee, can be differently set according to preference and type of coffee bean. Therefore, coffee powder having a preset size refers is not the coffee powder of a specific size, but can vary depending on preference and type of coffee bean.

In addition, a coffee maker of the present disclosure refers to an apparatus for mixing coffee powder, i.e., ground coffee, with water, dissolving coffee ingredients in water, and then extracting liquid coffee or coffee liquid. The coffee liquid refers to water containing coffee ingredients extracted from coffee powder.

Therefore, in the disclosure, extracting coffee liquid means bringing water into contact with coffee powder to create water containing coffee ingredients extracted from the coffee powder. Unless otherwise stated, coffee generally refers to coffee liquid, and coffee beans and coffee powder refer to coffee in solid form.

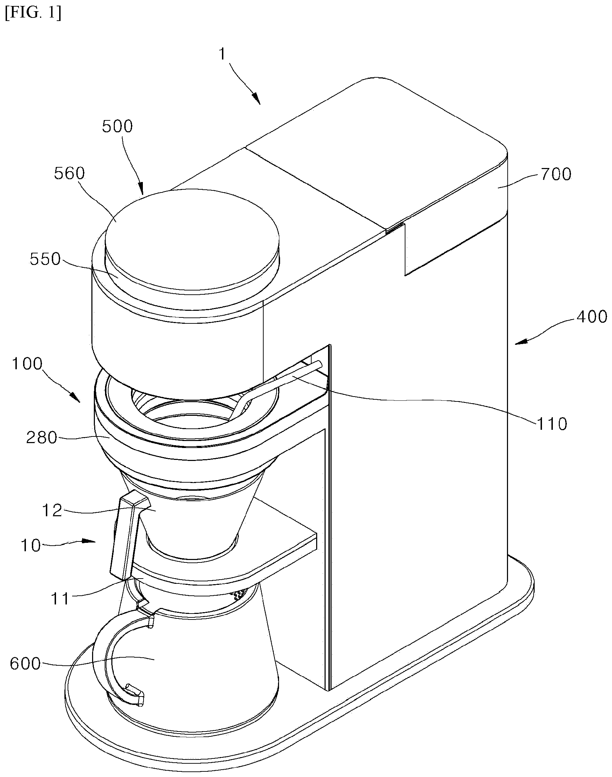

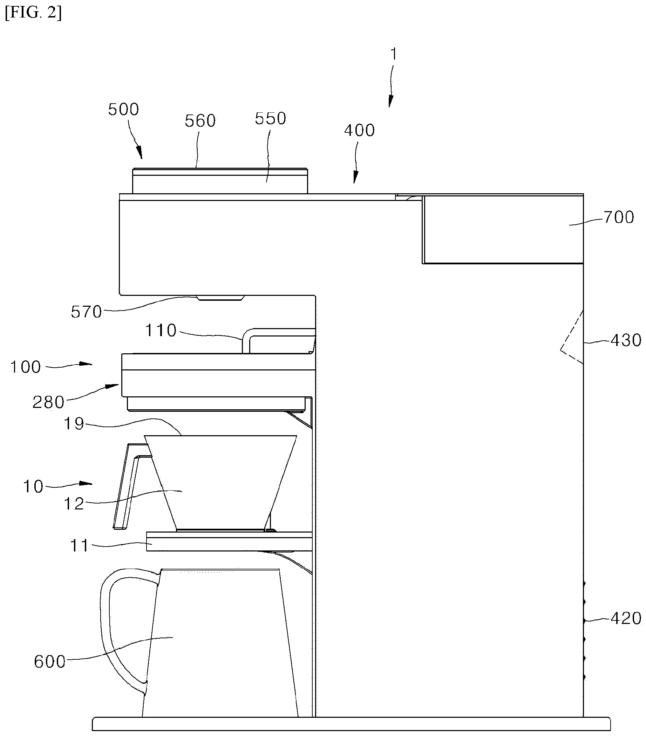

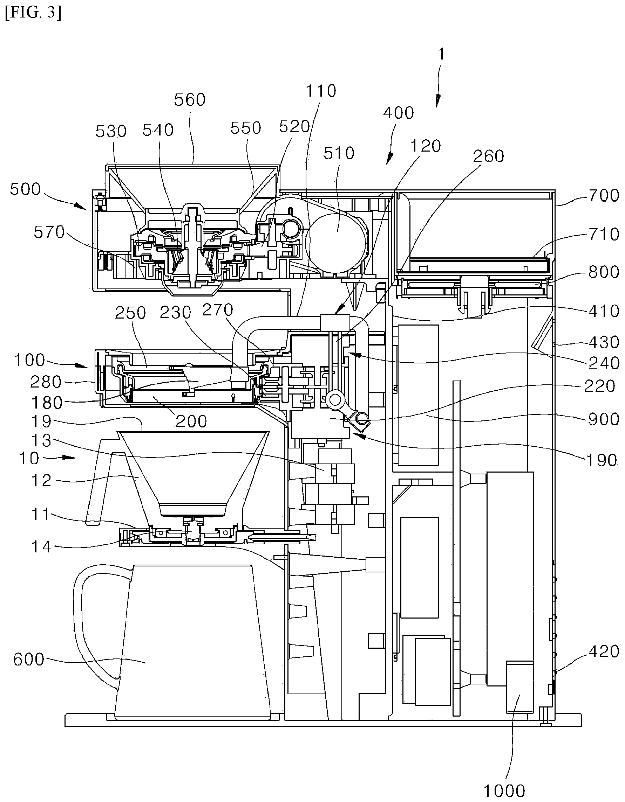

FIG. 1 is a perspective view of a coffee maker 1 that variably supports a water supply tube according to an embodiment of the present invention. FIG. 2 is a front view of the coffee maker 1 that variably supports a water supply tube according to an embodiment of the present invention. FIG. 3 is a cross-sectional view of the coffee maker 1 that variably supports a water supply tube according to an embodiment of the present invention.

As shown in FIGS. 1 to 3, the coffee maker 1 that variably supports a water supply tube includes at least one of a dripper 10, a water outlet module 100, a case part 400, a grinder 500, a server 600, a water supply tank 700, a heating part 800, a control part 900, and a blowing fan 1000.

In addition, the water outlet module 100 that supplies water to the dripper 10 includes a water supply tube 110 and a variable support part 120. In addition, the water outlet module 100 includes at least one of a water outlet arm 180, a first moving part 190, a second moving part 240, a movable housing part 280, and a position measurement part 290.

The case part 400 extends in the upward-downward direction and supports each component that makes up the coffee maker. The grinder 500, water outlet module 100, dripper 10, and server 600 are disposed in front (on the left side in FIG. 3) of the case part 400 according to an embodiment of the present invention. Also, the water tank 700, heating part 800, and control part 900 are installed at the rear of the case part 400 (on the right side in FIG. 3).

Since the water tank 700 is detachably installed in the case part 400, water supply and cleaning of the water tank 700 can be easily performed. The heating part 800 is installed on the lower side of the water tank 700, and the water stored in the water tank 700 is heated by the operation of the heating part 800.

The control part 900 is installed below the heating part 800, and the coffee maker is operated by a control signal from the control part 900.

The water tank 700, heating part 800, and control part 900 are installed at the rear of the case part 400, and the front and rear of the case part 400 are partitioned by a support partition 410. The support partition 410 has a plate shape extending in the upward-downward direction.

The grinder 500 located in front of the case part 400 has an open upper side to receive coffee beans. The grinder 500 according to an embodiment of the present invention includes a funnel-shaped hopper 550 and an upper cover 560 that opens and closes the upper side of the hopper 550. The open upper side of the hopper 550 is opened and closed by the upper cover 560.

In addition, the grinder 500 includes a support housing 570 fixed to the case part 400. The hopper 550 is installed on the upper side of the support housing 570, and a grinding gear 540 is provided on the lower side of the hopper 550. A grinding motor 510, which is the power source of the grinder 500, is fixed to the case part 400, and the power generated by the operation of the grinding motor 510 rotates the grinding gear 540 and grinds the coffee beans discharged to the lower side of the hopper 550.

The coffee beans ground in the grinder 500 turn into powder and fall to the lower side of the grinder 500. The coffee powder that falls to the lower side of the grinder 500 falls to the dripper 10 through the inside of the water outlet module 100.

The water outlet module 100 is installed between the grinder 500 and the dripper 10 to supply water to the upper side of the dripper 10. The water outlet module 100 supplies the water supplied through the water tank 700 to the inside of the dripper 10. The water arm 180 and water supply tube 110 move by the operation of the two motors provided in the water outlet module 100, and the water is supplied to the inside of the dripper.

The dripper 10 has an open top, and stores coffee beans ground in the grinder 500 inside thereof. In addition, heated water is supplied through the water supply tube 110 provided in the water outlet module 100, and liquid coffee is extracted downward.

The server 600 is a container containing liquid coffee and is located below the dripper 10. The front (on the left side in FIG. 3) and rear (on the right side in FIG. 3) of the case part 400 are divided around the support partition 410 installed inside the case part 400.

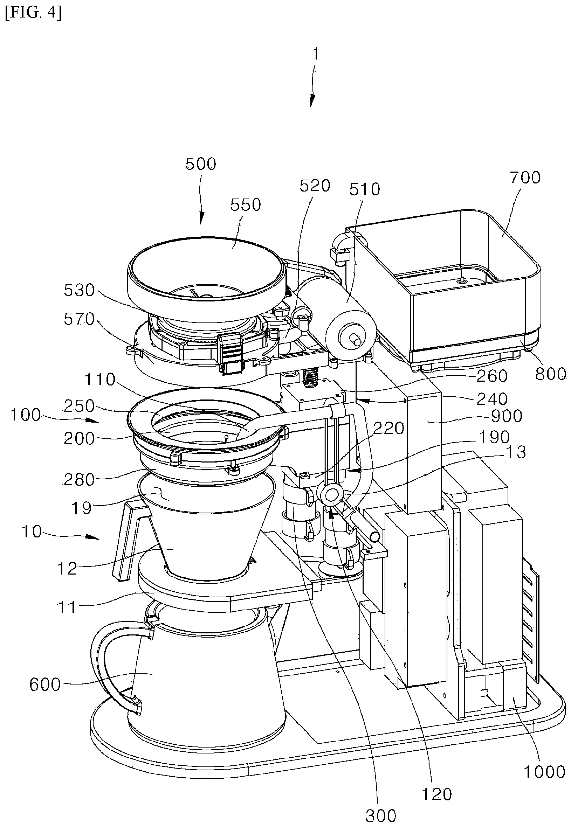

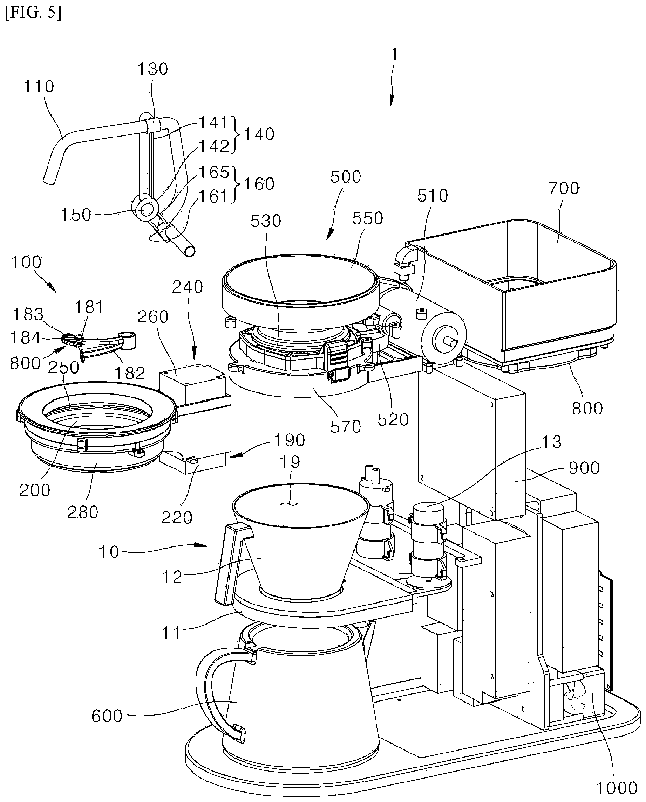

FIG. 4 is a perspective view illustrating a main configuration of the coffee maker 1 that variably supports a water supply tube according to an embodiment of the present invention. FIG. 5 is an exploded perspective view illustrating a main components of the coffee maker 1 that variably supports a water supply tube according to an embodiment of the present invention.

As shown in FIGS. 3 to 5, in the coffee maker 1 that variably supports a water supply tube according to an embodiment of the present invention, the water outlet module 100 is located below the grinder 500, the dripper 10 is located below the water outlet module 100, and the server 600 is located below the dripper 10. The water tank 700 and heating part 800 are installed in the case part 400, and the water in the water tank 700 is supplied to the water supply tube 110 of the water outlet module 100 through the water pump 300.

The case part 400 forms the exterior of the coffee maker product. The grinder 500, water outlet module 100, dripper 10, server 600, water tank 700, heating part 800, and control part 900 are installed in the case part 400. A panel-shaped support partition 410 extends in the upward-downward direction inside the case part 400.

The grinder 500, water outlet module 100, dripper 10, and server 600 are installed in front of the case part 400, which constitutes the exterior of the coffee maker, and the water tank 700, heating part 800, and control part 900 are installed at the rear of the case part 400.

The support partition 410 divides a space in front of the case part 400 and a space in the rear of the case part 400. Since the support partition 410 is installed, heat dissipation from the control part 900, heating part 800, etc. installed at the rear of the case part 400 is quickly achieved.

A blowing fan 1000 for heat dissipation is installed at the rear of the case part 400, and the case part 400 is provided with an inlet hole 420 and discharge hole 430 for air movement. Therefore, the air, which has moved to the inside of the case part 400 through the inlet hole 420, passes through the blowing fan 1000, cools the control part 900 and heating part 800 in order, and then is exhausted to the outside of the case part 400 through a discharge hole 430.

Since the support partition 410 is installed inside the case part 400, a space for heat dissipation is reduced, and the control part 900 and heating part 800 can be cooled quickly, thereby improving the durability of the parts.

In addition, even if some of the water coming out of the water outlet module 100 splashes into the control part 900, the movement of water toward the control part 900 is blocked by the support partition 410. Therefore, when water from the water outlet module 100 moves to the control part 900 and heating part 800, the movement of water is blocked by the support partition 410 to prevent malfunction of the control part 900 and heating part 800.

The grinder 500 is installed in the case part 400 and can be transformed into various shapes within the technical idea of grinding coffee beans and discharging them to the bottom. The grinder 500 according to the present invention receives power from the grinding motor 510 and grinds coffee beans.

The grinder, which is a grinding module that grinds coffee beans, grinds coffee beans to produce coffee powder of a set size or less. Because a grinding degree varies depending on the type of coffee and a degree of extraction may also vary, the grinding degree may change depending on the user's choice or type of coffee.

The grinder 500 is disposed on the upper side of the dripper 10 so that the coffee powder discharged from the grinder 500 falls on the inside of the dripper 10. In addition, the water outlet module 100 that supplies water to the inside of the dripper 10 is also disposed on the upper side of the dripper 10.

Since the grinder 500 has a relatively large size, in case that the water outlet module 100 is disposed above the grinder 500, when water falls downward from the water outlet module 100 toward the dripper 10, the supply of water may be interrupted by the grinder 500. Accordingly, the water outlet module 100 is disposed between the grinder 500 and the dripper 10.

The grinder 500 according to an embodiment of the present invention includes a grinding motor 510, a transmission gear 520, a rotator 530, a grinding gear 540, a hopper 550, an upper cover 560, and support housing 570.

The grinding motor 510 receives electrical energy and generates rotational power. The grinding motor 510 is fixed to the case part 400, and the power of the grinding motor 510 is transmitted to the rotator 530 through the transmission gear 520.

The transmission gear 520 includes a plurality of gears, including a gear connected to the output shaft of the grinding motor 510, and the respective gears engage and rotate to transmit the power of the grinding motor 510.

The support housing 570 is fixed to the case part 400. The rotator 530 is rotatably fixed inside the support housing 570. In addition, teeth are formed on the outer peripheral surface of the rotator 530, and the transmission gear 520 engages with the outer peripheral surface of the rotator 530 to rotate.

The grinding gear 540 is installed inside the rotator 530 to grind coffee beans. When the rotator 530 rotates and the grinding gear 540 also rotates, the coffee beans discharged to the lower side of the hopper 550 are ground.

The hopper 550 is shaped like a funnel, and its cross-sectional area gradually narrows downward. The upper and lower sides of the hopper 550 are open, and the hopper 550 is fixed to the support housing 570 or case part 400.

The upper cover 560 is installed at the open inlet of the hopper 550. The upper cover 560 opens and closes the upper inlet of the hopper 550, thereby blocking coffee beans inside the hopper 550 from moving to the outside of the hopper 550.

The dripper 10 receives ground coffee and water through the open upper side, extracts liquid coffee from the ground coffee, and discharges the coffee to the lower side. The dripper 10 is installed between the water outlet module 100 and the server 600.

The inside of the dripper 10 is provided with a space for containing the filter and coffee powder. The dripper 10 is provided with a space to contain high-temperature water supplied through the water outlet module 100 and coffee powder supplied through the grinder 500. The coffee powder contained in the dripper 10 comes into contact with water to extract coffee, which is liquid coffee.

The dripper 10 includes a container 12 with an open top, and a filter accommodated within the container 12. The container 12 and filter are open at the top, and coffee powder and water are received in the filter. Only the liquid coffee created when coffee powder and water meet flows down the bottom of the filter, and the coffee powder gets caught in the filter and is located inside the filter.

The container 12 serves to stably support the filter. The container 12 is shaped like a funnel to facilitate guiding the coffee liquid downward.

The dripper 10 according to an embodiment of the present invention may include a support housing 11, a container 12, an opening/closing motor 13, and a dripper valve 14.

When discharging the coffee liquid to the lower side of the container 12, the user can directly open and close the lower side of the container 12, and can automatically open and close the lower side of the container 12 using an electric device.

The support housing 11 extends in the horizontal direction and is fixed to the case part 400. The container 12 is located on the upper side of the support housing 11. Since the container 12 is detachably installed in the support housing 11, the inside of the container 12 can be easily cleaned.

The opening/closing motor 13 is fixed to the case part 400 and receives electrical energy to provide rotational power. The rotational power of the opening and closing motor 13 is transmitted to the dripper valve 14 installed on the lower side of the container 12 through a plurality of gears.

Since the outlet provided on the lower side of the container 12 is opened and closed by the rotation of the dripper valve 14, the coffee liquid can be automatically discharged through the outlet of the container 12. As for the dripper valve 14, various types of opening and closing valves can be used within the technical idea of opening and closing the outlet provided on the lower side of the container 12 through a rotation operation.

The server 600 is located below the dripper 10 and is a container that holds the coffee extracted from the dripper 10. The server 600 receives and stores the coffee liquid discharged through the outlet of the dripper 10. In addition, the server 600 is detachably installed on the coffee maker so that the coffee stored in the server 600 can be moved to another location.

The water tank 700 forms a space for storing water and is detachably installed in the case part 400. The water contained in the water tank 700 is heated to a set temperature by heating the hot plate 710 provided inside the water tank 700.

The water tank 700 may be detachably installed in the case part 400. In addition, the water tank 700 may include a water level sensor that measures the water level of the stored water, and a temperature sensor that measures the temperature of the water stored in the water tank 700.

The heating part 800 is located below the water tank 700 and heats the heating plate 710 provided in the water tank 700 by electromagnetic induction heating. The heating part 800 heats the hot plate 710 using an induction heating method. Since the heating part 800 heats the hot plate 710 using the induction heating principle, the time required to heat the hot plate 710 can be reduced.

The control part 900 installed below the heating part 800 is located inside the case part 400. The control part 900 is a device that controls components included in the coffee maker 1 and includes electrical components such as a PCB.

As an example, the control part 900 may include a board, a processor and electronic components mounted on the board. In addition, the control part 900 may control the operation of the electric device provided in the water outlet module 100 to operate the water outlet module 100. In addition, the control part 900 controls the operation of all components described in the present invention.

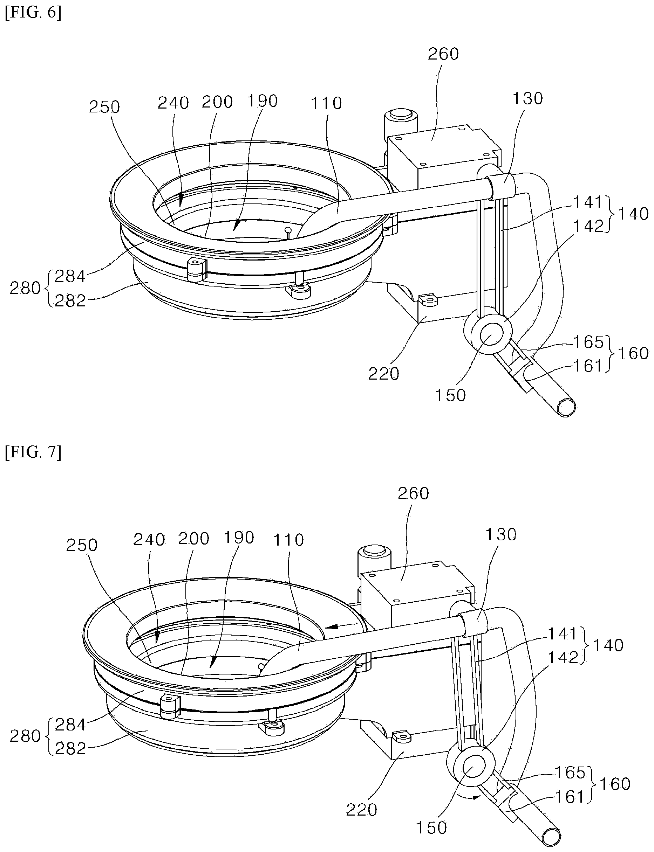

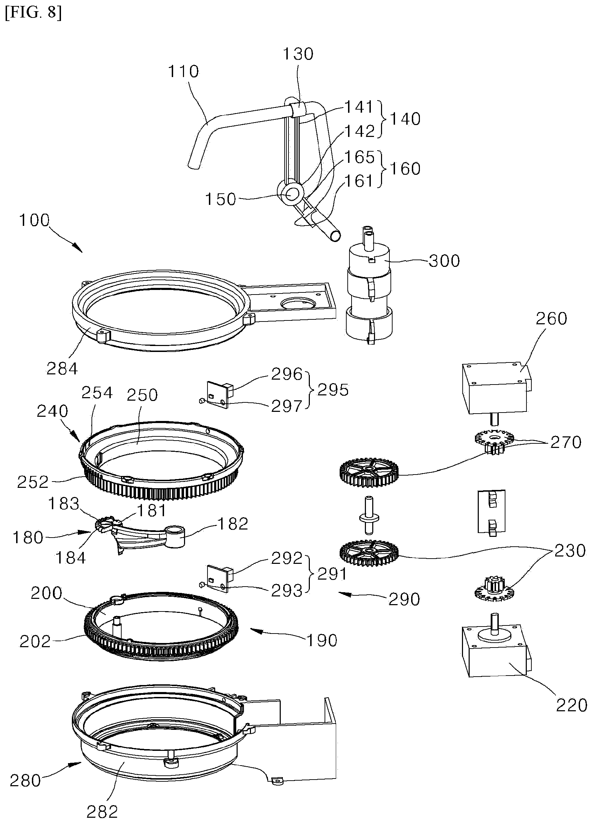

FIG. 6 is a perspective view illustrating a state in which the variable support part 120 supports the water supply tube 110, according to an embodiment of the present invention, FIG. 7 is a perspective view illustrating a state in which the connection frame 140 is rotated around a rotational support shaft 150, according to an embodiment of the present invention, and FIG. 8 is an exploded perspective view of the water outlet module 100 according to an embodiment of the present invention.

As shown in FIGS. 6 to 8, the water outlet module 100 is located on the upper side of the dripper 10 and supplies water to the inside of the dripper 10. The water outlet module 100 supplies the water supplied through the water tank 700 to the inside of the dripper 10 containing coffee powder.

In order for the water discharged from the water outlet module 100 to fall inside the dripper 10 by gravity, the water supply tube 110 of the water outlet module 100 is located on the upper side facing the inlet 19 of the dripper 10.

The water outlet module 100 may include a heating device that heats water. In addition, the water outlet module 100 can receive heated hot water from an external water supply source, or can receive heated water through the water tank 700.

Therefore, the water outlet module 100 can supply heated water to the coffee powder in the dripper 10 by discharging heated water. In addition, the water outlet module 100 receives unheated room temperature water and can supply room temperature water to the coffee powder in the dripper 10.

The soft water supply tube 110 is connected to the water outlet arm 180 provided in the water outlet module 100, and the water supply tube 110 moves along with the movement of the water outlet arm 180. The inside of the water outlet module 100 is provided with a hollow extending in the upward-downward direction, and coffee powder falls through the hollow provided in the water outlet module 100.

The coffee powder that falls from the grinder 500 installed on the upper side of the water outlet module 100 falls to the dripper 10 through the hollow provided in the water outlet module 100. In order to minimize the phenomenon in which coffee powder falling into the dripper 10 hits the water outlet arm 180 or water supply tube 110, the water outlet arm 180 and water supply tube 110 are positioned away from the falling path of the coffee powder.

The water outlet module 100 according to an embodiment of the present invention includes the water supply tube 110 that supplies water to the inlet 19 of the dripper 10, a pipeline support part 130 installed in a shape surrounding the outside of the water supply tube 110, a connection frame 140 extending from the pipeline support part 130, and a rotational support shaft 150 that rotatably connects the connection frame 140 to the movable housing portion 280 of the water outlet module 100.

The water supply tube 110 may be made of a flexible material. The water supply tube 110 may be made of a soft tube, and has a bendable property so that it can be easily moved along the water outlet arm 180.

Since the water supply tube 110 is supported by the variable support part 120, when the water supply tube 110 moves together with the water outlet arm 180, the variable support part 120 supports the water supply tube 110, thereby preventing the water supply tube 110 from sagging or load concentration.

One side of the water supply tube 110 is connected to the water pump 300, and the other side of the water supply tube 110 is connected to the water outlet arm 180. The water supply tube 110 is a circular tube, and may be made of silicone or rubber.

As the water supply tube 110 moves, the pipeline support part 130 and connection frame 140 rotate around the rotational support shaft 150, and the water supply tube 110 is stably supported.

The water supply tube 110 is installed in a shape that extends in the horizontal direction from the upper side of the movable housing part 280 and then bends toward the inside of the movable housing part 280. The other end of the water supply tube 110 is connected to the water outlet arm 180, and one end of the water supply tube 110 may be connected to the water pump 300 or to a separate connector.

The variable support part 120 may be variously modified within the technical idea of stably supporting the moving water supply tube 110. The variable support part 120 according to an embodiment of the present invention includes the pipeline support part 130, the connection frame 140, the rotational support shaft 150, and a pipeline mounting part 160.

The pipeline support part 130 is formed in a ring shape and has an inner diameter larger than the outer diameter of the water supply tube 110. The pipeline support part 130 has a circular pipe shape, and the water supply tube 110 is installed in a shape that penetrates the inside of the pipeline support part 130.

The connection frame 140 extends to the lower side of the pipeline support part 130. Various modifications are possible within the technical idea that the upper side of the connection frame 140 is connected to the pipeline support part 130 and the lower side is rotatably connected to the rotational support shaft 150.

The connection frame 140 according to an embodiment of the present invention includes a main frame 141 that extends below the pipeline support part 130 and a subframe 142 that is connected to the lower portion of the main frame 141 and connected to the rotational support shaft 150.

The main frame 141 has a bar shape and extends in the upward-downward longitudinal direction. The subframe 142 is connected to the bottom of the main frame and has a hole on the inside for the rotational support shaft 150 to pass through.

The rotational support shaft 150 penetrates the connection frame 140 and is fixed to the side surface of the movable housing part 280. Accordingly, the connection frame 140 and pipeline support part 130 can rotate around the rotational support shaft 150. The rotational support shaft 150 can be fixed to the movable housing part 280, and various modifications are possible, such as being fixed to fixed parts other than the movable housing part 280.

The pipeline mounting part 160 is connected to the subframe 142, and various modifications are possible within the technical ideal of having a groove for inserting the water supply tube 110. The pipeline mounting part 160 according to an embodiment of the present invention includes a mounting block 161 that forms a groove for inserting the water supply tube 110, and a mounting frame 165 connecting the mounting block 161 and subframe 142.

The water supply tube 110 is inserted and fixed into the groove provided in the mounting block 161. Since the water supply tube 110 is inserted into the groove provided in the mounting block 161 while supported by the pipeline support part 130, interference with other parts of the moving water supply tube 110 can be prevented.

The mounting block 161 may have a substantially hexahedral shape and, if necessary, may be formed in various shapes including a sphere.

The mounting frame 165 can be modified in various ways within the technical idea of connecting the mounting block 161 and subframe 142. The mounting frame 165 according to an embodiment of the present invention has a bar shape and extends from the subframe 142 in a downwardly inclined direction.

The variable support part 120 rotates around the rotational support shaft 150 as the water supply tube 110 moves. Since the soft water supply tube 110 moving along the water outlet arm 180 is supported by the variable support part 120, damage to the water supply tube 110 can be prevented and maintenance costs can be reduced.

The mounting body 181 is rotatably coupled to the first moving part 190. The first arm 182 extends from the mounting body 181 and is connected to the water supply tube 110. The second arm 183 extends from the mounting body 181 and is caught by a gear provided in the second moving part 240.

The water outlet arm 180 is rotatably installed on the first ring gear 200, and the water supply tube 110 is rotatable connected to one side (on the right side in FIG. 8) of the water outlet arm 180. As the water outlet arm 180 moves, the water supply tube 110 also moves along the water outlet arm 180, and the water discharge can be uniformly distributed over the set area.

The water outlet arm 180 according to an embodiment of the present invention includes a mounting body 181, a first arm 182, and a second arm 183.

The mounting body 181 is rotatably coupled to the first ring gear 200 provided in the first moving part 190. The first ring gear 200 includes a rotational support protrusion 210 that protrudes upward, and the mounting body 181 is installed in a shape that surrounds the upper end of the rotational support protrusion 210.

The first arm 182 extends from the mounting body 181 and is connected to the second supply tube 110. The first arm 182 extends a predetermined length from the mounting body 181, and is provided with a ring-shaped hook at an end for rotatably connecting the lower side of the water supply tube 110.

The second arm 183 extends from the mounting body 181 and has a protruding gear 184 engaged with a gear provided on the second moving part 240. The second arm 183 extends a predetermined length from the mounting body 181, and a protruding gear 184 for engaging the inner gear 254 of the second moving part 240 is provided on the outer peripheral surface of the second arm 183.

The water outlet arm 180 faces the inlet 19 of the dripper 10 and is located on the upper side of the dripper 10, and is capable of rotating around the rotational support protrusion 210. The first arm 182 is located on the upper side of the dripper 10, and the outlet of the water supply tube 110 coupled to the first arm 182 is also located on the upper side of the dripper 10.

In addition, since the rotational support protrusion 210 rotates in the circumferential direction together with the first ring gear 200, the water outlet arm 180 can also revolve together with the rotational support protrusion 210.

The second arm 183 is formed in a fan shape, and a gear is formed in an arc shape on the outer peripheral surface of the second arm 183. The protruding gear 184 formed on the outer peripheral surface of the second arm 183 engages with the inner gear 254 provided in the second ring gear 250, and rotates according to relative positions of the first ring gear 200 and second ring gear 250.

The first water outlet nozzle is disposed in the vertical direction and is rotatably inserted into a ring provided at the end of the first arm 182. The first water outlet nozzle can perform various motions such as rotation and revolution together with the first arm 182.

Since the soft water supply tube 110 is supported by the variable support part 120, stress is prevented from concentrating on the water outlet arm 180 connected to the water supply tube 110, thereby increasing the durability of the water outlet arm 180 and increasing the operation reliability of the water outlet arm 180.

The first moving part 190 rotatably supports the water outlet arm 180, and various modifications are possible within the technical idea of moving the water outlet arm 180 in the circumferential direction. The first moving part 190 according to an embodiment of the present invention includes the first ring gear 200, the rotational support protrusion 210, the second drive motor 260, and the first connection gear 230.

The first ring gear 200 extends in a ring shape, and a first external gear 202 is provided along the outer circumference. The rotational support protrusion 210 has a protrusion shape that protrudes upward from the body of the first ring gear 200 and rotatably supports the water outlet arm 180.

The first external gear 202 is made of teeth arranged along the outer periphery of the first ring gear 200, and may be formed over the entire outer periphery of the first ring gear 200.

The rotational support protrusion 210 is installed in the vertical direction and can be inserted into the mounting body 181 of the water outlet arm 180. Therefore, the water outlet arm 180 can stably rotate around the water outlet body connected to the rotational support protrusion 210.

The first drive motor 220 can be modified in various ways within the technical idea of supplying power to rotate the first ring gear 200. The first drive motor 220 according to an embodiment of the present invention uses an electric motor, and a servo motor or a motor equipped with an encoder may also be used.

The first connection gear 230 transmits the power of the first drive motor 220 to the first ring gear 200, and if necessary, multiple gears can be engaged to transmit power.

The second moving part 240 is gear-connected to the water outlet arm 180 and is configured to rotate the water outlet arm 180 around the rotational support protrusion 210 together with the first water outlet nozzle. The second moving part 240 causes the water outlet arm 180 to rotate around the rotational support protrusion 210 while the water outlet arm 180 rotates together with the first ring gear 200. The first ring gear 200 and second ring gear 250 may be configured to rotate the water outlet arm 180 around the rotational support protrusion 210 while rotating in the same direction.

The second moving part 240 is installed in succession to the first moving part 190 and has a gear engaged with the water outlet arm 180. In addition, the second moving part 240 rotates in the same direction as the first moving part 190, and various modifications are possible within the technical idea of rotating the water outlet arm 180 due to a speed difference from the first moving part 190. The second moving part 240 according to an embodiment of the present invention includes the second ring gear 250, the second drive motor 260, and the second connection gear 270.

The second ring gear 250 extends in a ring shape on the upper side of the first ring gear 200, and a second external gear 252 is provided along the outer circumference. Also, an inner gear 254 that engages with the water outlet arm 180 is provided on the inside of the second ring gear 250.

The inner gear 254 is made of teeth arranged along the inner periphery of the second ring gear 250, and may be formed over a portion of the inner periphery of the second ring gear 250. The protruding gear 184 provided on the water outlet arm 180 is engaged with the inner gear 254.

The second external gear 252 is made of teeth arranged along the outer periphery of the second ring gear 250, and may be formed over the entire outer periphery of the second ring gear 250.

The second drive motor 260 can be modified in various ways within the technical idea of supplying power to rotate the second ring gear 250. he second connection gear 270 transmits the power of the second drive motor 260 to the second ring gear 250, and if necessary, multiple gears can be engaged to transmit power.

The movable housing part 280 supports the first movable part 190 and second movable part 240, and various modifications are possible within the technical idea of being fixed to the case part 400. The movable housing part 280 according to an embodiment of the present invention includes a lower housing 282 and an upper housing 284.

The lower housing 282 is installed in a shape that surrounds the lower side of the second moving part 240 and is fixed to the case part 400. The first ring gear 200 and second ring gear 250 are rotatably installed on the upper side of the lower housing 282.

The upper housing 284 is located above the lower housing 282 and is installed in a shape that surrounds the upper side of the first moving part 190. The upper housing 284 is fixed to the upper side of the lower housing 282, and the first ring gear 200 and second ring gear 250 are rotatable installed between the upper housing 284 and the lower housing 282.

The connection frame 140 of the variable support part 120 is rotatably installed on the side surface of the movable housing part 280 according to an embodiment of the present invention.

The position measurement part 290 may be variously modified within the technical idea of measuring the position of the first ring gear 200 and the position of the second ring gear 250 and transmitting the measured values to the control part 900. The position measurement part 290 according to an embodiment of the present invention includes a first measurement part 291 and a second measurement part 295.

The first measurement part 291 measures the position of the first ring gear 200 and transmits the measured value to the control part 900. The first measurement part 291 according to an embodiment of the present invention includes a first measurement sensor 292 mounted on the movable housing part 280, and a first magnet 293 mounted on the first ring gear 200.

The first magnet 293 is mounted on the outside of the first ring gear 200, and the first measurement sensor 292 is fixed on the outside of the movable housing part 280. The first measuring part 291 is a Hall sensor and detects the position of the first magnet 293 rotating together with the first ring gear 200.

The second measurement part 295 measures the position of the second ring gear 250 and transmits the measured value to the control part 900. The second measuring part 295 according to an embodiment of the present invention includes a second measuring sensor 296 mounted on the movable housing part 280, and a second magnet 297 mounted on the second ring gear 250.

The second magnet 297 is mounted on the outside of the second ring gear 250, and the second measurement sensor 296 is fixed on the outside of the movable housing part 280. The second measuring part 295 is a Hall sensor and detects the position of the second magnet 297 rotating together with the second ring gear 250.

The water pump 300 operates with supply of electricity and supplies the water delivered through the water tank 700 to the water supply tube 110. The water supply tube 110 may be directly connected to the water pump 300, and a connection socket may be additionally installed between the water supply tube 110 and the water pump 300.

Hereinafter, the operating state of the coffee maker 1 that variably support a water supply tube according to an embodiment of the present invention will be described in detail with reference to the attached drawings.

The overall operation of the coffee maker will be described with reference to FIGS. 3 and 5. After coffee beans are put into the hopper 550 of the grinder 500 and the grinding motor 510 is operated, the power of the grinding motor 510 is transmitted to the rotator 530 through the transmission gear 520 and rotates the rotator 530 .

As the rotator 530 rotates, the grinding gear 540 rotates and makes the coffee beans into coffee powder. The coffee powder that falls from the grinder 500 passes through the inside of the water outlet module 100 and accumulates inside the container 12 of the dripper 10.

Then, the water stored inside the water tank 700 is heated by the heating part 800, and the heated water moves to the water supply tube 110 through the water pump 300. The water moved to the water supply tube 110 falls to the lower side of the water outlet arm 180 and is supplied to the dripper 10.

The water outlet arm 180 and water supply tube 110 move along a spiral shape and the direction in which water falls can be controlled.

The second supply pipe is rotatably connected to the first arm 182 of the water outlet arm 180, and the second arm 183 provided on the water outlet arm 180 is engaged with the inner gear 254 provided on the second ring gear 250.

While the first ring gear 200 and second ring gear 250 rotate clockwise, the second ring gear 250 on the upper side rotates clockwise more than the first ring gear 200 by a set angle. For example, when the first ring gear 200 rotates by 45°, the second ring gear 250 rotates by 46°. Since a phase difference of 1° occurs between the first ring gear 200 and the second ring gear 250, the water outlet arm 180 rotates clockwise while revolving.

While the first ring gear 200 and second ring gear 250 continue to rotate clockwise, the water outlet arm 180 continues to rotate and revolve. For example, when the first ring gear 200 rotates by 90°, the second ring gear 250 rotates by 92°. Since a phase difference of 2° occurs between the first ring gear 200 and the second ring gear 250, the water outlet arm 180 rotates clockwise while revolving. The first arm 182 moves toward the inside of the second ring gear 250 in a spiral shape from the center of the second ring gear 250.

While the first ring gear 200 and second ring gear 250 continue to rotate clockwise, the water outlet arm 180 continues to rotate and rotate. For example, when the first ring gear 200 rotates by 135°, the second ring gear 250 rotates by 138°. Since a phase difference of 3° occurs between the first ring gear 200 and the second ring gear 250, the water outlet arm 180 rotates clockwise while revolving. The first arm 182 continues to move inside the second ring gear 250 in a spiral shape from the center of the second ring gear 250.

If the first ring gear 200 and second ring gear 250 continue to rotate in the same manner as above, when the first ring gear 200 rotates by 495° from the default position, the second ring gear 250 rotates by 506° from the default position. Since a phase difference of 11° occurs between the first ring gear 200 and the second ring gear 250, the water outlet arm 180 rotates clockwise while revolving.

By the operation method described above, the end of the first arm 182 of the water outlet arm 180 draws a spiral circle from the center of the second ring gear 250 and gradually moves in a direction away from the center of the second ring gear 250. Therefore, water falling from the water supply tube 110 connected to the first arm 182 can be uniformly supplied to the coffee powder contained in the dripper 10.

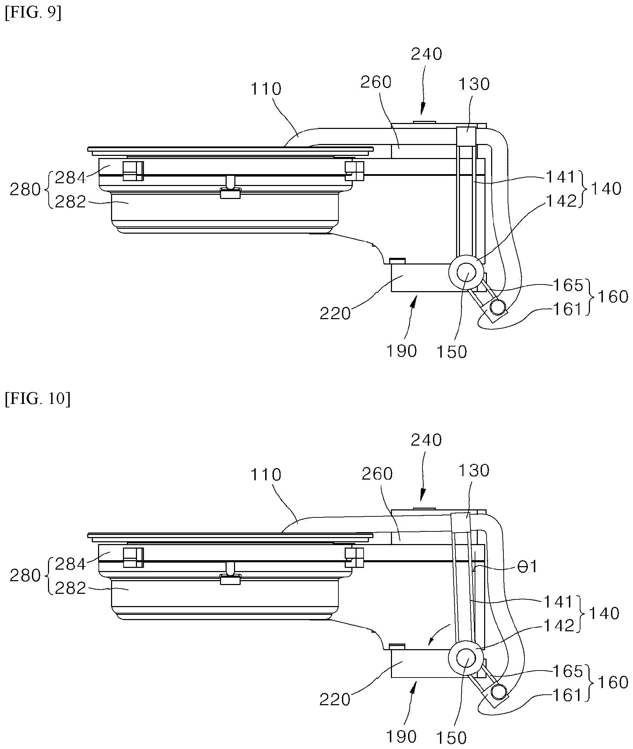

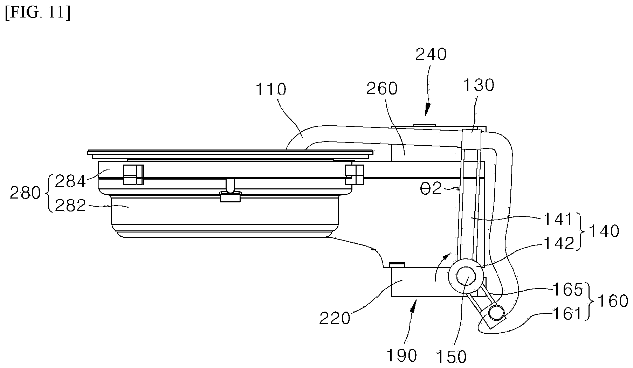

FIG. 9 is a front view illustrating a state in which the variable support part 120 supports the water supply tube 110, according to an embodiment of the present invention, FIG. 10 is a front view illustrating a state in which the variable support part 120 rotates in a first direction, according to an embodiment of the present invention, and FIG. 11 is a front view illustrating a state in which the variable support part 120 rotates in a second direction, according to an embodiment of the present invention.

As shown in FIG. 9, when the water supply tube 110 is at the default position, the connection frame 140 may be installed parallel to the vertical line. Since the pipeline support part 130 supports the water supply tube 110, it prevents the water supply tube 110 from sagging, thereby preventing the water supply tube 110 from coming into contact with other parts.

If the water supply tube 110 is in contact with other parts and is damaged, water leaking from the water supply tube 110 may damage the parts of the coffee maker 1 that variably supports a water supply tube or cause a short circuit.

As shown in FIG. 10, when the water supply tube 110 moves forward (on the left side in FIG. 10), the pipeline support part 130 supporting the water supply tube 110 also moves forward along with the water supply tube 110. Also, the connection frame 140 connected to the pipeline support part 130 rotates by a first angle θ1 set counterclockwise around the rotational support shaft 150.

Also, as shown in FIG. 11, when the water supply tube 110 moves rearward (on the right side in FIG. 10), the pipeline support part 130 supporting the water supply tube 110 also moves rearward together with the water supply tube 110. Also, the connection frame 140 connected to the pipeline support part 130 rotates by a second angle θ2 set clockwise around the rotational support shaft 150.

As described above, according to the present invention, the variable support part 120 including the pipeline support part 130, the connection frame 140, and the rotational support shaft 150 is rotatably installed on the side surface of the movable housing part 280. Since the water supply tube 110 is installed in a shape that penetrates the pipeline support part 130, the pipeline support part 130 moves as the water supply tube 110 moves, and the water supply tube 110 can be stably supported.

In addition, when the soft water supply tube 110 moves, the pipeline support part 130 supporting the water supply tube 110 rotates around the rotation support shaft 150 and supports the water supply tube 110, so that it is possible to alleviate the phenomenon where the load of the water supply tube 110 is concentrated on parts connected to the water supply tube 110.

As described above, the present invention has been described with reference to the illustrative drawings, but the present invention is not limited to the embodiments and drawings disclosed herein, and various modifications may be made by those skilled in the art within the scope of the technical idea of the present invention. In addition, although the operational effects according to the configuration of the present invention were not explicitly described and explained while explaining the embodiments of the present invention, it is apparent that the predictable effects due to the configuration should also be recognized.

## Claims

1. A coffee maker that variably supports a water supply tube, comprising:
a dripper, which receives water and ground coffee via an open upper side thereof, and extracts liquid coffee from the ground coffee and discharges the liquid coffee downward; and
a water outlet module which is located above the dripper and supplies the water to an inside of the dripper,
wherein the water outlet module comprises
a water supply tube which supplies the water to an inlet of the dripper;
a pipeline support part which is installed in a shape so as to surround an outside of the water supply tube;
a connection frame which extends from the pipeline support part; and
a rotational support shaft which rotatably connects the connection frame to a moving housing part of the water outlet module.

2. The coffee maker of claim 1, wherein the water supply tube is made of a soft tube.

3. The coffee maker of claim 1, wherein the pipeline support part is formed in a ring shape and has an inner diameter larger than an outer diameter of the water supply tube.

4. The coffee maker of claim 3, wherein the connection frame extends to a lower side of the pipeline support part, and includes an upper side connected to the pipeline support part and a lower side rotatably connected to the rotational support shaft.

5. The coffee maker of claim 1, further comprising:
a water outlet arm to which the water supply tube is rotatably connected;
a first moving part that rotatably supports the water outlet arm and moves the water outlet arm in a circumferential direction; and
a second moving part that is successively installed on the first moving part, includes a gear engaged with the water outlet arm, rotates in the same direction as the first moving part, and rotates the water outlet arm by a speed difference from the first moving part.

6. The coffee maker of claim 5, wherein the water outlet arm comprises:
a mounting body that is rotatably coupled to the first moving part;
a first arm that extends from the mounting body and is connected to the water supply tube; and
a second arm that extends from the mounting body and is engaged by the gear provided in the second moving part.

7. The coffee maker of claim 5, wherein the first moving part comprises:
a first ring gear that extends in a ring shape and includes a first external gear along an outer circumference;
a rotational support protrusion that protrudes from the first ring gear and rotatably supports the water outlet arm;
a first drive motor that supplies power to rotate the first ring gear; and
a first connection gear that transmits the power of the first drive motor to the first ring gear.

8. The coffee maker of claim 7, wherein the second moving part comprises:
a second ring gear that extends in a ring shape above the first ring gear, and includes a second external gear along an outer circumference, and an inner gear engaging the water outlet arm on an inside thereof;
a second drive motor that supplies the power to rotate the second ring gear; and
a second connection gear that transmits the power of the second drive motor to the second ring gear.

9. The coffee maker of claim 5, wherein the movable housing part supports the first moving part and the second moving part and is fixed to the case part,
the connection frame is rotatably installed on a side of the movable housing part.

10. The coffee maker of claim 9, wherein the water supply tube moves together with the water outlet arm, and as the water supply tube moves, the pipeline support part and the connection frame rotate around the rotational support shaft.

11. The coffee maker of claim 1, wherein the connection frame comprises:
a main frame that extends downward from the pipeline support part; and
a subframe that is connected to a lower portion of the main frame and is connected to the rotational support shaft.

12. The coffee maker of claim 11, further comprising a pipeline mounting part that is connected to the subframe and includes a groove for inserting the water supply tube.

13. The coffee maker of claim 12, wherein the pipeline mounting part comprises:
a mounting block that forms a groove into which the water supply tube is inserted; and
a mounting frame that connects the mounting block and the subframe.

14. The coffee maker of claim 1, further comprising:
a case part that forms an exterior of a product; and
a grinder that is installed in the case part, grinds coffee bean to discharge the ground coffee to the dripper located on a lower side thereof.

15. The coffee maker of claim 14, further comprising a server located below the dripper and including the coffee extracted from the dripper.
